# EUROPEAN PATENT SPECIFICATION

(11) **EP 2 283 403 B1**
(45) Date of publication and mention of the grant of the patent: **26.08.2015**
(21) Application number: 09779500.9
(22) Date of filing: 18.05.2009
(51) Int. Cl.: G05B 19/042, H02J 13/00, H04L 12/24, G05B 19/418

(54) **SYSTEM AND METHOD FOR IMPLEMENTING A POWER CONTROL APPLICATION IN A DISTRIBUTED CONTROL SYSTEM USING IEC61850**
SYSTEM UND VERFAHREN ZUR INTEGRATION EINER LEISTUNGSSTEUERUNGSANWENDUNG IN EIN VERTEILTES STEUERSYSTEM MIT IEC61850
SYSTÈME ET PROCÉDÉ DE MISE EN UVRE D UNE APPLICATION DE COMMANDE DE PUISSANCE DANS UN SYSTÈME DE COMMANDE RÉPARTIE AU MOYEN DE IEC61850

(30) Priority: 16.05.2008 US 71782
(43) Date of publication of application: 16.02.2011
(73) Proprietor: ABB Technology AG, 8050 Zürich (CH)
(72) Inventor: WIMMER, Wolfgang, CH-5323 Rietheim (CH); KULATHU, Ganesh, Karnataka (IN); VETTER, Volker, CH-8157 Dielsdorf (CH)
(74) Representative: ABB Patent Attorneys
(86) International application number: PCT/EP2009/055982
(87) International publication number: WO 2010/003724

(56) References cited:
- US-A1- 2007 185 591
- Richard Biala: "Aktueller Stand der Elektro-und Leittechnik für Kraftwerke"[Online] 2007, pages 1-13, XP002558216 TechnikTreffBerlin 2007 Retrieved from the Internet: URL:http://www02.abb.com/global/deabb/deab b207.nsf/0/0bee5d0145e24cbfc125730e004f674 5/$file/ABB+Elektro-+und+Leittechnik+f%C3% BCr+Kraftwerke.pdf> [retrieved on 2009-11-30]
- Jonas Liden: "Design and Implementation of an IEC 61850 gateway for PLC Systems"[Online] 2006, pages 1-84, XP002558217 KTH Electrical Engineering Retrieved from the Internet: URL:http://www.ee.kth.se/php/modules/publi cations/reports/2006/XR-EE-ICS_2006_021.pd f> [retrieved on 2009-11-30]
- Klaus-Peter Brand: "IEC 61850 Short Tutorial"[Online] March 2005 (2005-03), pages 1-34, XP002558218 Retrieved from the Internet: URL:http://www.ceb5.cepel.br/arquivos/even tos_setor/iec61850_tutoria.pdf> [retrieved on 2009-11-30]
- ANONYMOUS: "Substation Configuration Language - Summary"[Online] August 2006 (2006-08), pages 1-13, XP002578382 Retrieved from the Internet: URL:http://cimug.ucaiug.org/Harmonization% 20Documents/EPRI%20Harmonization%20Project %20Notes%20and%20Minutes/IEC%20TC57%20Subs tation%20Configuration%20Language%20Summar y.pdf> [retrieved on 2009-11-30]
- Christoph Brunner: "IEC 61850 Object Model and Configuration Language"[Online] 10 March 2003 (2003-03-10), pages 1-23, XP002578383 Retrieved from the Internet: URL:http://www.pes-psrc.org/h/H5/H5-Brunne r_61850-intro.pdf> [retrieved on 2009-11-30]
- KEZUNOVI M ET AL: "Automated Monitoring and Control Using New Data Integration Paradigm" 20050103; 20050103 - 20050106, 3 January 2005 (2005-01-03), pages 66A-66A, XP010762451
- KOSTIC T ET AL: "TOWARDS THE FORMAL INTEGRATION OF TWO UPCOMING STANDARDS: IEC61970 AND IEC61850" LESCOPE. LARGE ENGINEERING SYSTEMS CONFERENCE ON POWERENGINEERING CONFERENCE PROCEEDINGS. ENERGY FOR THE FUTURE, XX, XX, 7 May 2003 (2003-05-07), pages 24-29, XP008050807

## Description

### FIELD

The present disclosure relates to the field of industrial automation systems. More particularly, the present disclosure relates to implementing a power control application in a Distributed Control System (DCS) using IEC61850.

### BACKGROUND

Distributed Control System (DCS) is used extensively to monitor and control processes in an industrial plant. A DCS is an automated control system having many process controllers distributed in an industrial plant for controlling different processes in the industrial plant. An industrial plant, particularly, the larger ones such as refineries, petrochemical plants, power plants have significant electrical processes to be monitored and controlled in their many substations. The electrical processes in these substations are typically monitored and controlled using an Industrial Substation Automation System, henceforth referred as Industrial SA system. The Industrial SA system uses identical hardware to the DCS and is configured through engineering processes that are similar to a conventional Substation Automation (SA) system, but are disjoint to the DCS engineering processes.

Currently, large industrial plants include DCS to control the plant processes and Industrial SA systems to control electrical processes related with distributing electrical power to various power consumers within the plants, such as drives or motors or pumps. It is to be noted that the processes typically controlled by the DCS are being referred to as "plant processes" and the processes typically controlled by the Industrial SA system are being referred to as "electrical processes" in this document.

The DCS and Industrial SA systems have completely different functionality and have no or very little connectivity between each other. The connectivity of these systems is typically possible only via gateways at OPC layer and not at controller or device layer. The connectivity allows use of data from the Industrial SA system into the DCS system and vice versa. The provision of connectivity helps to provide consolidated view of the plant for both the plant processes and electrical processes. However, it is to be noted that the process controllers of the two systems are usually configured individually and the processes are viewed in the respective systems.

Power control and/or automation applications, for example load shedding, generator real and reactive power control, unit control, and synchronization are performed to provide optimum power reliability, utilization and control for industrial plants. These applications typically run on process controllers of Industrial SA system and corresponding process displays, alarms or events, and trends are implemented on the Industrial SA process visualization system. On the other hand, process control applications, for example boiler process control, distillation process control, turbine control etc are run on process controllers of the DCS and corresponding process displays, alarms or events, and trends are implemented on the DCS process visualization system.

It is to be noted that the prior-art system described above are based on use of two systems (DCS and Industrial SA system) for monitoring and control applications in large process industries. The two systems are engineered, commissioned and maintained as two separate systems, thereby increasing the total cost of ownership and operation for the process industries.

In practice, it is possible to reduce system cost by utilizing components of one system to cater to purpose of both the systems. One example is the process controller of DCS is capable to cater to power control application instead of process controller of Industrial SA system. However, to enable this configuration, the connectivity at OPC layer or direct connection at I/O of the process controller of DCS through separate point to point electrical cabling is required. The connectivity solution though enables use of data of one system by the other system but is much susceptible to reliability issues (single point of failure at OPC gateway), hardship (separate cabling and configuration) and sluggish response due to multiple protocol translations or/and other adaptation required in software/hardware to make system/data communication compatible between the two systems.

However, for applications such as plant wide power control, a centralized process controller needs to interact with the protection and control Intelligent Electronic Devices (IED) in various substations of the plant. The current integrated setup due to its limitation with connectivity (single access point or communication interface for connectivity) has difficulty to access IEDs that are connected to a network within a substation and thereby having very limited capability to host applications such as plant wide power control through the integrated system. Due to the limitations in connectivity between the process controller and protection and control IEDs, direct hard wiring is used.

Further, from engineering perspective it is desirable to adopt IEC 61850 as the communication standard for interoperability between automation devices present on a substation network. The IEC 61850 advocates interoperability amongst Intelligent Electronic Devices (IEDs) from various manufacturers using common engineering models, data formats and communication protocol. The adaptation of IEC 61850 for the industrial SA system allows effective use of SA system tools for configuration and designing applications.

In light of the foregoing discussion, there is a need for an efficient approach to integrate or combine the DCS and the industrial SA system to effectively host power control application in the DCS.

The presentation by Richard Biala entitled "Aktueller Stand der Elektro- und Leittechnik für Kraftwerke", 2007, pages 1-13, XP002558216 depicts an IED for control and protection of MV components integrated via an "IEC 61850 Industrial Ethernet" into a control network for a power plant.

The thesis by Jonas Liden entitled "Design and Implementation of an IEC 61850 gateway for PLC Systems", KTH Electrical Engineering 2006, pages 1-84, XP002558217, investigates how to implement and test an IEC 61850 interface for turbine controllers, in order to make a PLC communicate in accordance with IEC 61850. Section 5.1 recites a mapping of data objects in IEC 61850 to the process values stored in the memory of the controller.

The article by Mladen Kezunovic et al., entitled "Automated Monitoring and Control Using New Data Integration Paradigm", 3 January 2005, XP010762451 relates to data conversion between IEC 61850 (Substation Automation SA) and IEC 61970 (Network Control Centre NCC system for a Transmission System Operator or utility).

### SUMMARY

Embodiments of the present disclosure provide a system and method for implementing plant process and electrical process control application in a Distributed Control System (DCS).

An exemplary Integrated Industrial Automation System for plant process control and electrical process control in an industrial plant with a substation for distributing electrical power to various power consumers within the plant comprises
- an Intelligent Electronic Device IED adapted to protect and/or control the substation,
- a plant process engineering tool configured to generate a configuration file in a format native for plant process engineering, the plant process engineering tool being configured to receive a Substation Configuration Description (SCD) file resulting from engineering a power control application based on IEC 61850 for controlling the electrical process, and to generate the configuration file based on the SCD file, and
- a process controller adapted to control a plant process via one or more process control devices configured to receive the configuration file, to run the power control application and to communicate to the IED electrical process control messages pertaining to the power control application.

The exemplary Integrated Industrial Automation System for plant process control and electrical process control in an industrial plant with a substation for distributing electrical power to various power consumers within the plant comprises:
(a) an engineering station for engineering plant process control and electrical process control applications;
(b) a process visualization station for viewing and controlling of the plant and electrical processes;
(c) a server for managing information and operation of the system;
(d) an Intelligent Electronic Device (IED) adapted to protect and/or control the substation; and
(e) a process controller adapted to control a plant process and communicatively connected to the IED.

Preferably, the process controller is capable of communication using IEC 61850 communication standard, and connected to the IED through a unified communication bus conveying both plant process control messages and electrical process control messages.

In further preferred embodiments, the process controller manages at least one power control application or one process control application or a combination thereof, and/or the process controller comprises one or more communication interface for communicating with one or more substations. In addition, the engineering station and the process visualization station may be integral to the one or more servers.

An exemplary method for controlling an electrical process of an industrial plant with a substation for distributing electrical power to various power consumers within the plant, wherein a Distributed Control System DCS with a process controller for controlling a plant process is provided comprises the steps of:
(a) engineering an IEC61850 based power control application for controlling the electrical process, resulting in a Substation Configuration Description SCD file;
(b) importing the SCD file into a plant process or DCS engineering tool;
(c) generating an IEC 61850-equivalent configuration file by the plant process engineering tool based on the imported SCD file; and
(d) transferring the IEC 61850-equivalent configuration file to the process controller.

Preferably, the step of importing the SCD file comprises translating or converting IEC61850 configuration information into a DCS configuration format.

In further preferred embodiments, the step of engineering the power control application involves specifying configuration definitions and/or parameters as well as configuring the communication interfaces and the IEC61850 application model that the power application uses, and/or the configurations are carried out using a plant process engineering tool having at least one module for IEC61850 configurations or for IEC61850 based configurations.

Advantageously, the step of engineering an IEC 61850 based application in an electrical process engineering tool utilizes the IED Capability Description (ICD) files and the plurality of parameters of electrical substation automation specified based on the IEC 61850 standard in the electrical process engineering tool; wherein the process of generating ICD files are at least one of:
(a) Utilizing an IED tool to describe an electrical application or a function or their combination that associate the electrical application or the function or their combination with various IED types and configurations; or
(b) Specifying a plurality of parameters of electrical substation automation based on IEC 61850 standard in an plant process engineering tool to create an ICD file for export from the plant process engineering tool; or
(c) a combination of process described in (a) and (b).

### BRIEF DESCRIPTION OF THE DRAWINGS

**FIG. 1** is a block diagram of an integrated industrial automation system in accordance with one embodiment;
**FIG. 2** illustrates a method for implementing a power control application in a Distributed Control System (DCS);
**FIG. 3** is an exemplary illustration for implementing a power control application in a DCS, in accordance with one embodiment;
**FIG. 4** is an exemplary illustration of a method for implementing a power control application in a DCS, in accordance with another embodiment;
**FIG. 5** illustrates a method for enabling an IEC61850 compliant process controller of a DCS to control a power control application; and
**FIG. 6** is an exemplary illustration for enabling an IEC61850 compliant process controller of a DCS to control a power control application.

### DETAILED DESCRIPTION

Embodiments of the present disclosure provide a method and system for implementing a power control application in a Distributed Control System (DCS).

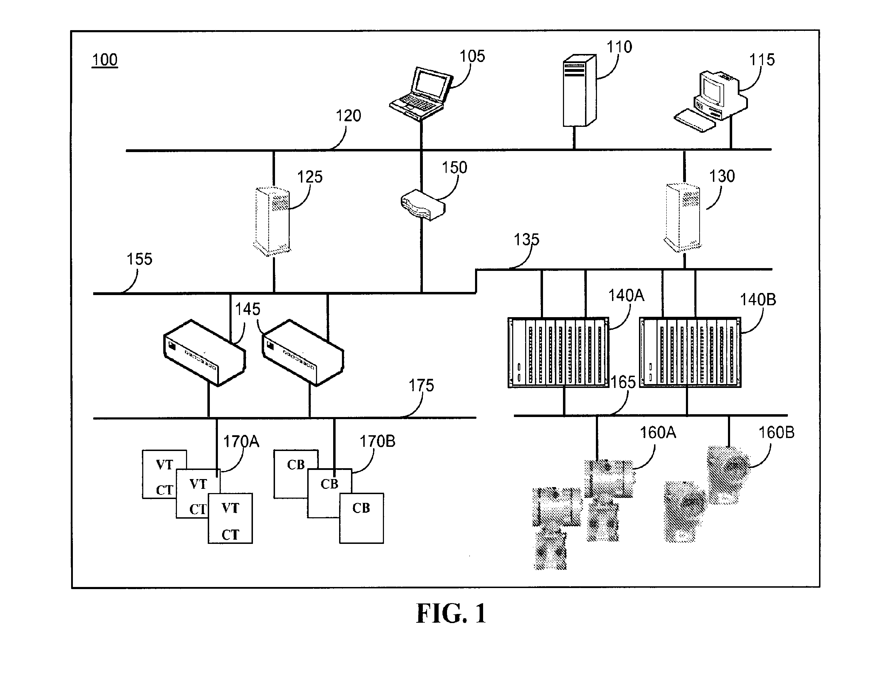

**FIG. 1** is a block diagram of an integrated industrial automation system **100** in accordance with one embodiment. The integrated industrial automation system **100** is an integration of an Industrial SA system and the DCS. The integration is described with the DCS as the base system and being extended to integrate a Industrial SA system. However, other embodiments with the Industrial SA system as the base system and extended to integrate a DCS is also a valid means to provide an integrated industrial automation system.

The integrated industrial automation system **100** includes a combined DCS and SA engineering station **105** for configuring a plurality of plant and electrical processes and transferring a plurality of configuration files to process controllers **140A**, **140B** and/or :Intelligent Electronic Devices (IED) **145**.

The integrated industrial automation system **100** also includes a process visualization station **115**, basically an operator workplace, for enabling viewing and controlling of electrical and plant processes. The process visualization station uses a process visualization server **110** for assisting the process visualization system in performing different functions. The process visualization station also includes a Human Machine Interface (HMI) for enabling users to interact with the process visualization station. The integrated industrial automation system **100** has the process visualization station **115** and the process visualization server **110** connected to a plant bus **120** for overseeing working of the industrial plant.

The integrated industrial automation system **100** also includes one or more connectivity servers for routing information of the electrical and plant processes between the process visualization station and other devices of the system. Examples of the connectivity servers include an IEC 61850 connectivity server **125** and a DCS connectivity server **130**, connected to a station bus 135 and control bus **135** respectively. The IEC 61850 connectivity server **125** routes real time electrical process information between the process visualization station and one or more protection and control IEDs **145**. In an embodiment, the IEC 61850 connectivity server **125** also routes real time electrical process information between the process visualization system and one or more process controllers, for example process controller **140A** and process controller **1.40B.** The DCS connectivity server **130** routes real time plant process information between the process visualization system and the process controllers, **140A** and **140B**. The routing operations to download a plurality of IED61850 Industrial SA engineering configurations to the protection and control IEDs **145** are carried out by a router **150** connected to a station bus **155** and the plant bus **120**. The DCS engineering configuration download for the process controllers **140A** and **140B** are carried out by the DCS connectivity server **130** that performs a routing operation. As will be apparent from the following, this download may include IED61850 configuration for the process controllers **140A** and **140B** which, upon suitable preparation, is similar to any other DCS application configuration. In some embodiments, the station bus **155** and the control bus **135** is combined to form a unified physical communication bus for the integrated industrial automation system **100**.

In an embodiment, the process controller **140** has the capability of connecting with other devices on IEC61850 or any open or proprietary DCS communication protocol.

In an embodiment, functions of the IEC61850 connectivity server **1.25** and the DCS connectivity server **130** can be performed by a single connectivity server.

The devices associated with the DCS and SA engineering station **105** and the connectivity servers are at least one of the IED61850 compliant process controllers **140A** and **140B** and the protection and control IEDs **145.** The IEC61850 compliant process controller **140A** processes data received from the protection and control IEDs **145**. The IEC61850 compliant process controller **140A** is based on IEC61850 and is interfaced with one or more process control devices, for example flow transmitters **160A** and valves **160B**, via a Field Bus **165**, for example, PROFINET. The IEC61850 compliant process controller **140A** includes IEC61850 interfaces, for example access points, inherent DCS communication interfaces and Field Bus interfaces. The IEC61850 compliant process controller **140A** further includes a processor module and a plurality of communication interfaces to support the above mentioned interfaces. The communication interfaces are represented as IEC61850 access points in the modeling perspective.

The IEC61850 compliant process controller **140A** communicates with the IEC61850 connectivity server, through its communication interfaces. The processor module handles functions related to the power control applications and process control applications concurrently. The communication interfaces are used for communicating with the protection and control IEDs **145** over the unified communication bus **135**, **155** IEC61850 Generic Object Oriented Substation Event (GOOSE). The GOOSE communication profile is the mode for I/O data exchange between IEDs participating in power control applications. The protection and control IEDs **145** can also communicate with the IEC61850 compliant process controller **140A**. The integrated industrial automation system **100** further includes the protection and control IED **145** for receiving information from one or more power control devices, for example voltage transformers and current transformers **170A**, circuit breakers **170B**, and disconnectors, via an IEC61850 or equivalent process bus **175**.

In an embodiment, the IED61850 compliant process controller **140A** manages at least one power control application or one process control application or a combination thereof

The IEC61850 compliant process controller **140A** typically includes, but is not limited to one or more industrial standard interfaces, for example, HART, PROFINET, MODBUS, PROFIBUS, and other Common Industrial Protocol (CIP) interfaces.

The IED61850 compliant process controller **140B** can also function similar to the IEC61850 compliant process controller **140A**.

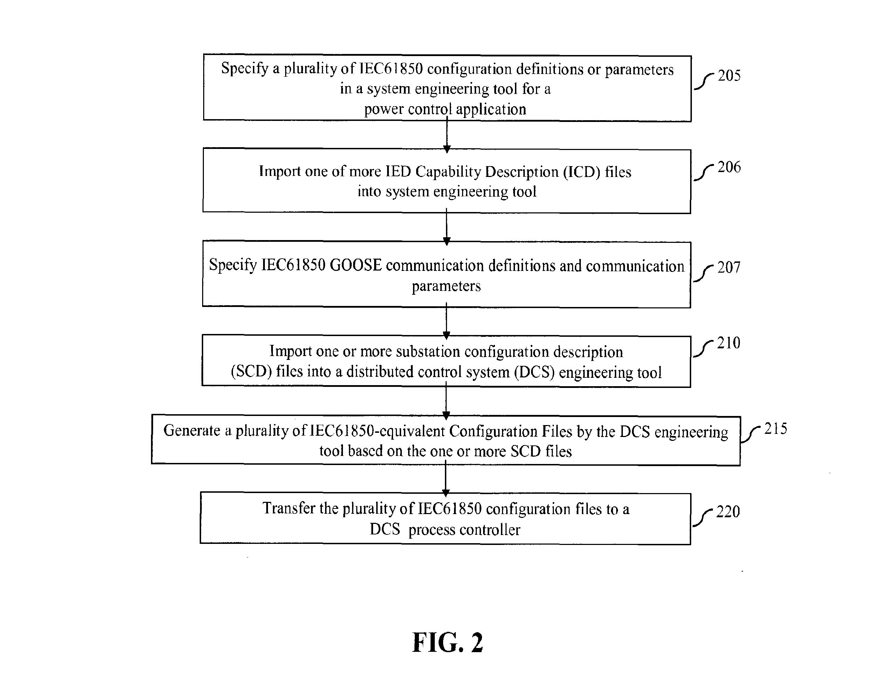

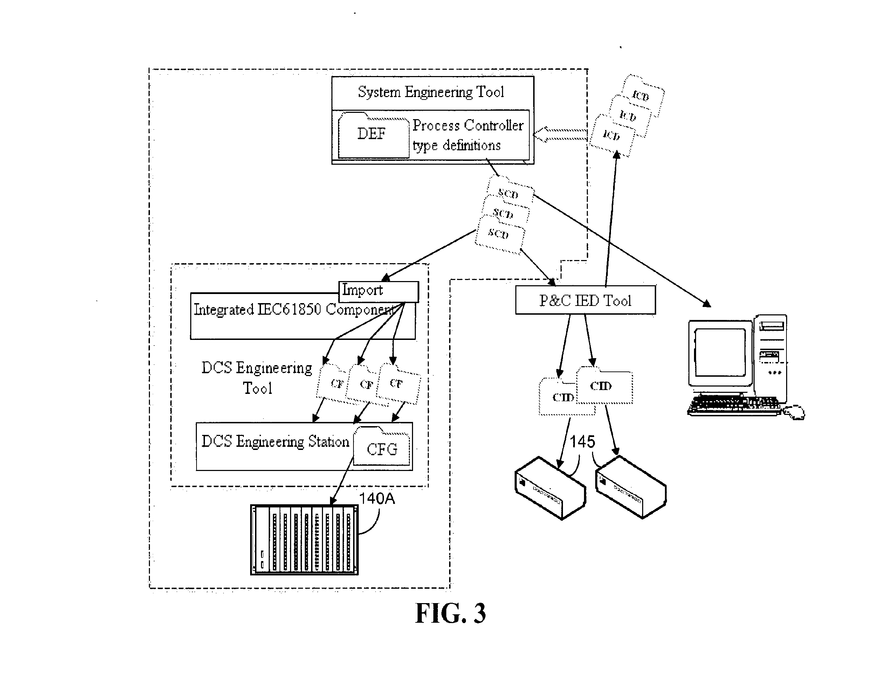

**FIG. 2** illustrates a method for implementing a power control application in a DCS and **FIG 3** provides an exemplary illustration of the method. In the following, the method is described for implementing a power control application like load shedding, generator real and reactive power control, unit control, and synchronization, wherein at least for the purpose of the present invention, power control application is also supplemented with other industrial SA functions such as circuit breaker or disconnector control, bay control, online bus bar transfer, or sequencing.

The implementation is carried out using various engineering tools for plant process engineering and electrical process engineering. In the various illustrations and descriptions, the plant process engineering tool is referred as DCS engineering tool and the electrical process engineering tool is referred as system engineering tool. The DCS engineering tool is developed to have one or more modules or components to adapt IEC 61850 based description formats into a description format native for plant process engineering example formats suitable for IEC 61131 based engineering.

It is to be noted that various engineering tools described may exists as one integrated or as multiple tools with features similar and different from the ones described in this invention. It is further to be noted that some of the steps related with engineering of devices or system may be carried out externally and the devices may be offered or procured as pre-engineered devices directly for integration into the system.

At step **205**, a plurality of configuration definitions and/or parameters of electrical substation automation IEC61850 standard are specified in a system engineering tool for the power control application. Examples of these configuration definitions and/or parameters include, but are not limited to, the ones that define the power control applications' model representation as per IEC61850 standard, or communication network parameters based on the IEC50 standard, such as selection of logical node class, assignment of access point to a communication interface, assignment of IP addresses and subnet details. The above confguration definitions and/or parameters are included in an IEC61850 model, based on IEC61850 type definitions, of the power control application intended to run in an [IEC61850 compliant DCS process controller. Exemplary IEC61850 type definitions include IEC61850 Logical Node types such as GAPC, PTRC, AVCO, ARCO, GGIO, ATCC, which are used to model or engineer the power control functionality by generating the necessary instances thereof. For example, load shedding as an exemplary power control application is modeled with Logical Node (LN) GAPC (Generic Automatic Process Control) and PTRC (Protection Trip Conditioning).

At step 206, IED Capability Description files (ICD) associated with various IED types and configurations are generated from a Protection and Control (P&C) IED Tool. These are then imported into the system engineering tool. The protection and control IED tool in some embodiments is a part of system engineering tool.

In step 207, using configuration information of the power control application and the IED Capability Description (ICD) files, IEC61850 GOOSE communication (between the IED61850 compliant process controller and the protection and control IEDs) configuration is completed. The final IEC61850 configuration for the power control application one or more Substation Configuration Description (SCD) files.

The protection and control IEDs are generally spread around an industrial plant in various substations. The protection and control IED tool also provides IED specific information from the SCD files to one or more Configured IED Description files (CID). The ICD files and the SCD files are files based on the IED61850 standard. A single SCD file can include information associated with the IEC61850 compliant process controller and the protection and control IEDs to communicate on IEC61850 GOOSE communication profile. Another SCD file can include information of the protection and control IEDs needed for the protection and control IEDs to communicate to a process visualization server on IEC61850 Manufacturers' Messaging Specification (MMS) communication profile. One or more power control applications can be accommodated in a single or multiple SCD files, typically, one SCD file per power control application.

At step **210**, an SCD file from the one or more SCD files is imported into a DCS engineering tool. An integrated import component, that is IED61850 based, is provided as part of the DCS engineering tool. The import component imports the SCD file that includes information associated with the IED61850 compliant process controller into the DCS engineering tool. The import component further translates or converts the IED61850 configuration of the SCD file into an internal, non-IEC61850 based configuration format proprietary to the DCS Engineering tool. The import component is included in an integrated IED61850 component provided as part of the DCS engineering tool.

At step **215**, a plurality of IEC61850-equivalent configuration files are generated by the DCS engineering tool based on the SCD files. The information from the imported SCD files is converted into a DCS engineering tool specific internal tree structure that is similar to any plant process application specific tree structure. The tree structure would typically represent the I/O structure of the electrical and plant process applications concurrently configured in the [IEC61850 compliant process controller, besides the process controller hardware components. Thus, once the IED61850 specific tree structure is created in the DCS Engineering tool, there is no real distinction with a power automation function tree structure. The integrated import component of the DCS engineering tool can then present the IEC61850 equivalent configuration in the DCS engineering tool. The IEC61850-equivalent configuration is in a proprietary format which can be understood by a user, for example a DCS configuration engineer and also eventually by a DCS process controller, which thus becomes the "IED61850 compliant process controller"

The import component of the integrated IED61850 component generates one or more IEC61850-equivalent configuration files (CF) according to the number of Inc61850 interfaces present in the IED61850 compliant process controller, c.f. **FIG. 3**. For every IEC61850 interface present in the IED61850 compliant process controller, one IEC61850 configuration file is generated.

At step **220**, the IEC61850 configuration files are transferred into the IEC61850 compliant process controller. The IEC61850 configuration files are transferred as standard download content into the IEC61850 compliant process controller. The IEC61850 configuration files generated by the import component can be assembled and transferred into the standard download content to be downloaded into the IEC61850 compliant process controller of the DCS. A DCS engineering station integrates the information of the IEC61850 CF and plant process control application information into a single configuration file (CFG) that is a tool specific internal file (**FIG. 3**). The CFG file can then transfer the content into the IEC61850 compliant process controller.

The above described method is system engineering based approach or a top down approach followed by the IEC61850 compliant process controller of a DCS.

In an embodiment, when the IEC61850 compliant process controller receives the content that includes information from the protection and control IEDs, the IEC61850 compliant process controller can send processed data, for example appropriate control actions, back to the protection and control IEDs. The communication can also be based on IED61850 GOOSE.

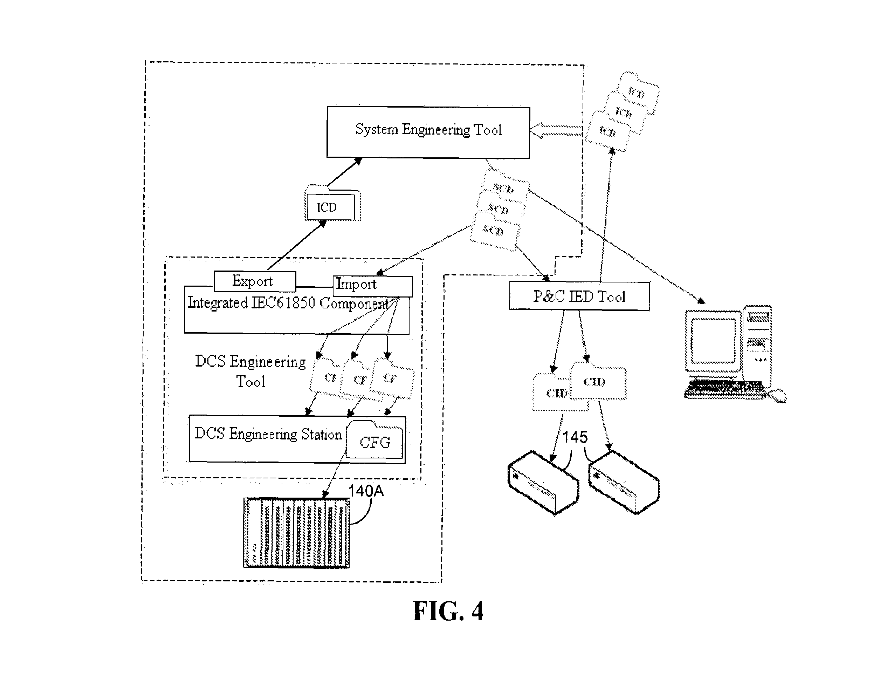

**FIG. 4** illustrates another embodiment, wherein the IED61850 compliant process controller follows an IED engineering based approach or a bottom up approach for implementing the power control application in the DCS. The IEC61850 models for power control applications are defined in the form of type definitions in the DCS engineering tool, wherein Logical Node classes GAPC, PTRC, ATCC, GGIO, ARCO, AVCO represent exemplary IEC61850 compliant process controller specific type definitions. A necessary number of application specific instances are instantiated during engineering, as needed for a power control application, using a user interface that is already built into the export component. This is to create an IEC61850-related tree structure in an internal format specific to the DCS engineering that is similar to a tree structure generated by any other process application. The export component of the DCS engineering tool then generates a process controller description file also referred to as ICD file (similar in format with the IED ICD file). The generated ICD file includes instance information specific to the power control application. The ICD file of the IEC61850 compliant process controller along with ICD files from the protection and control IED tool are imported into the system engineering tool.

Using configuration information of the power control application from the process controller ICD file and Protection and Control IEDs' ICD files, IED61850 GOOSE communication (between the IEC61850 compliant process controller and the protection and control IEDs) configuration is completed and SCD files are generated. One or more SCD files involving the IEC61850 compliant process controller can then be imported into the DCS engineering tool via an integrated IEC61850 "import" component. The tree structure would typically represent the I/O structure of the electrical and plant process applications concurrently configured in the IED61850 compliant process controller, besides the process controller hardware components. A plurality of IEC61850 configuration files can be generated in the DCS engineering tool based on the SCD files. The IEC61850 configuration files are then transferred to the IEC61850 compliant process controller and further processed in the IEC61850 compliant process controller. The processed data can then be sent back to the protection and control IEDs.

The exemplary illustration provided in **FIG. 4** comprises of an Integrated IEC61850 'Export' Component as a part of DCS Engineering tool that has a definition of the IEC61850 model of the Power Control application that is intended to be run in the Process Controller as a part of the DCS Engineering Tool. This model is in the form of type definitions, of which a necessary number of application specific instances are to be instantiated during engineering using the User Interface built into the 'Export' Component. This Component generates an ICD/CID file for the Process Controller.

Thus the DCS Engineering tool is provided with an import component and export component for engineering based on top-down and bottom-up approaches respectively. These components may exist in one or different forms and modules, being integral or external to the DCS Engineering tool.

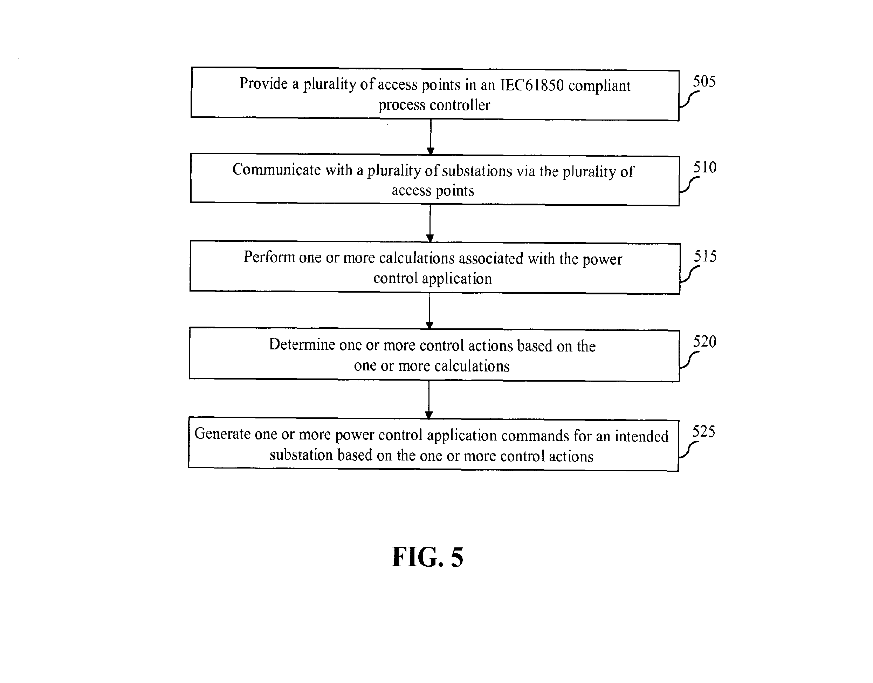

**FIG. 5** illustrates a method for enabling an IEC61850 compliant process controller of a DCS to control a power control application.

At step **505**, a plurality of communication interfaces is provided in the IEC61850 compliant process controller. The IED61850 compliant process controller of the DCS behaves as an IED when the IEC61850 compliant process controller hosting the power control applications interact with the protection and control IEDs. Industrial plants, for example refineries, petrochemical plants, and power plants often include multiple substations that are geographically distributed. The power control applications, for example load shedding, are spread around across multiple substations in an industrial plant thereby necessitating the interaction between the IEC61850 compliant process controller, that hosts the load shedding application, and the protection and control IEDs in the various substations. For the IEC61850 compliant process controller to be regarded as an IED, the IEC61850 compliant process controller includes a processor module and one or more communication interfaces. The communication interfaces are the IED61850 based access points.

At step **510**, the IEC61850 compliant process controller communicates with the substations via the communication interfaces. The IEC61850 compliant process controller also gets input data for the power control application and can further pass the information to other IED61850 compliant process controllers.

At step **515**, one or more calculations associated with the power control application are performed. The IED61850 compliant process controller can perform functionality or logical calculations associated with the power control application.

At step **520**, one or more control actions are determined based on the one or more calculations. The results of the calculations performed determine the control actions that need to be carried out and generate one or more power control application commands. The IEC61850 compliant process controller can pass decisions made to another IEC61850 compliant process controller or the protection and control IEDs via a communication interface. One or more logical processes, for example a marshalling logic, can further be implemented based on the decisions received.

At step **525**, one or more power control application commands are generated for an intended substation based on the one or more control actions.

The power control application commands are then routed to an intended substation. On implementation of the marshalling logic, the power control application commands can be routed to the intended substation through a corresponding communication interface.

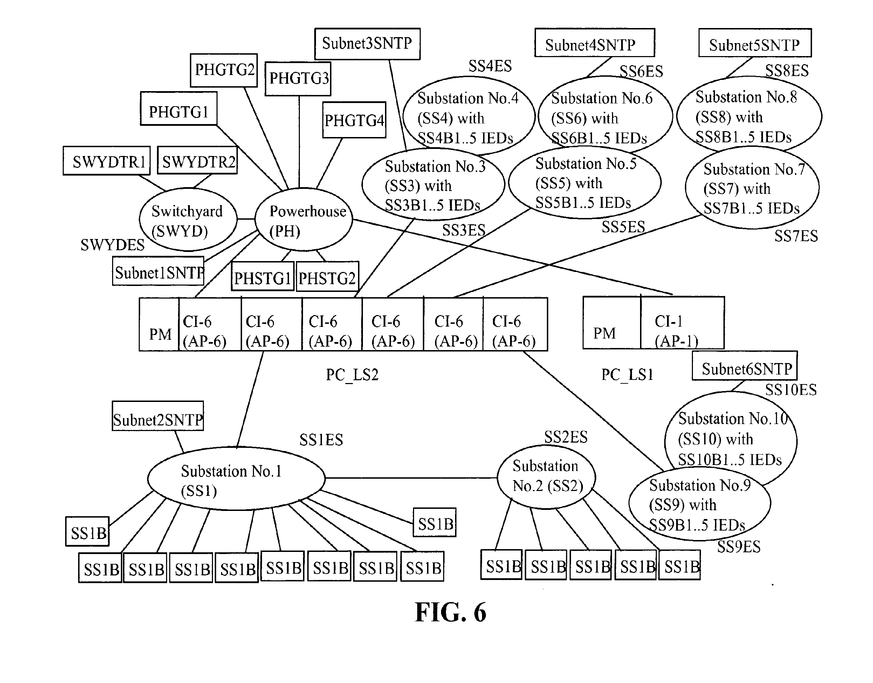

An exemplary illustration for the method described above is provided in **FIG. 6**. It is an example for a typical power control application configuration, for example load shedding.
▪ An industrial plant includes substations that have 3 voltage levels, for example 220kV, 33kV and 6.6kV
▪ A total of 12 substations are included:
   ∘ SWYD (switchyard) substation with 2 grid transformers, receiving power at 220kV and connected to the SS1 substation at 33kV
   ∘ Power house with 4 GTGs and 2 STGs (gas and steam turbine generators) pumping power into SS1 substation at 33kV
   ∘ Main receiving substation 1 (SS1) at 33kV with 10 sheddable feeders
   ∘ 9 nos distribution substation SS2 to SS 10 with 5 sheddable feeders each, at 6.6kV
   ∘ Each feeder is equipped with an IED61850 enabled IED
   ∘ In all 63 protection and control IEDs will be involved in load shedding functionality, communicating with process controller(s) on IEC61850.
∘ Formation of subnetworks:
   ∘ SWYD and PH substations are connected to a single subnetwork - Subnet1
   ∘ Substations SS1 and SS2 are connected to Subnet2
   ∘ Substations SS3 and SS4 are connected to Subnet3
   ∘ Substations SS5 and SS6 are connected to Subnet4
   ∘ Substations SS7 and SS8 are connected to Subnet5
   ∘ Substations SS9 and SS10 are connected to Subnet6
▪ Load shedding involves two IED61850 compliant process controllers since load shedding is a high complexity network:
   ∘ The IEC61850 compliant process controller comprises of a processor module (PM) and communication interface modules (CI) or communication interfaces. Every CI module is an IEC61850 server access point.
   ∘ Together with the PM and CI modules, the IEC61850 compliant process controller is regarded as an IED. The IEC61850 compliant process controller is an IED with multiple communication interfaces.
   ∘ An IEC61850 compliant process controller (PC_LS1) is provided to handle core load shedding functionality and to communicate to PC_LS2. Communication between the IEC61850 compliant process controllers is based on IEC61850 GOOSE.
      ▪ CI-1 connected to SubNetworkl
   ∘ An IEC61850 compliant process controller (PC_LS2) is provided to handle IEC61850 input and output data required for load shedding function.
      ▪ CI-1 connected to Subnet1
      ▪ CI-2 connected to Subnet2
      ▪ CI-3 connected to Subnet3
      ▪ CI-4 connected to Subnet4
      ▪ CI-5 connected to Subnet5
      ▪ CI-6 connected to Subnet6
   ∘ In such a configuration, the PC_LS2 has multiple communication interfaces, typically one communication interface could be considered catering to one substation or allocated to a single subnetwork. Cross data flows should be avoided, that is, data for a substation should flow out or in through the allocated communication interface and not also from other communication interfaces.
   ∘ From the IEC61R50 compliant process controller hardware configuration perspective, if the number of substations is more than the number of communication interfaces that can be supported by its processor module, then multiple substation networks can be combined to form a single subnetwork and connected to a single communication interface. At the same time, the number of IEDs that can be supported by a single communication interface can also be taken into consideration.
   ∘ The PC_LS2 takes away communication related overheads from the PC_LS1, thereby ensuring performance criteria for the load shedding function.
▪ The IEC61850 compliant process controller (PC_LS2) communicates with all substations through respective communication interfaces (CI modules) and gets in input data for load shedding and passes on information to PC_LS2 through CI-1.
▪ The PC_LS2 performs centralized load shedding functionality (logic) calculations and ascertains if any feeder in the SS1 to SS10 should be tripped based on system disturbance.
▪ The required decisions are passed by the PC_LS2 back to the PC_LS1 controller through its CI-1.
▪ The PC_LS1 implements a marshalling logic and routes the load shedding commands to the required substation through its corresponding CI module.

The foregoing description sets forth numerous specific details to convey a thorough understanding of embodiments of the invention. However, it will be apparent to one skilled in the art that embodiments of the invention may be practiced without these specific details. Some well-known features are not described in detail in order to avoid obscuring the invention. Other variations and embodiments are possible in light of above teachings, and it is thus intended that the scope of invention not be limited by this Detailed Description, but only by the Claims.

## Claims

1. An Integrated Industrial Automation System for plant process control and electrical process control in an industrial plant with a substation for distributing electrical power to various power consumers within the plant, the system comprising:
- an Intelligent Electronic Device IED (145) adapted to protect and/or control the substation,
- a process controller (140) adapted to control a plant process via one or more process control devices (160), and
- a plant process engineering tool configured to generate a configuration file in a format native for plant process engineering,
**characterized in that**
- the plant process engineering tool is configured to receive a Substation Configuration Description (SCD) file resulting from engineering a power control application based on IEC 61850 for controlling the electrical process, and to generate the configuration file based on the SCD file, and **in that**
- the process controller (140) is configured to receive the configuration file generated by the plant process engineering tool, to run the power control application and to communicate to the IED (145) electrical process control messages pertaining to the power control application.

2. The system of Claim 1, wherein the process controller (140) is configured to communicate to the IED (145) IEC61850 Generic Object Oriented Substation Event GOOSE messages.

3. The system of Claim 1, wherein the process controller (140) is configured to run load shedding applications.

4. A method for controlling an electrical process of an industrial plant with a substation for distributing electrical power to various power consumers within the plant, wherein a Distributed Control System DCS with a process controller (140) for controlling a plant process via one or more process control devices (160) and an Intelligent Electronic Device IED (145) adapted to protect and/or control the substation are provided, the method comprising the steps of:
(a) engineering an IEC61850 based power control application for controlling the electrical process, resulting in a Substation Configuration Description SCD file;
(b) importing the SCD file into a plant process or DCS engineering tool;
(c) generating a configuration file in a format native for plant process engineering, by the plant process engineering tool and based on the imported SCD file;
(d) transferring the configuration file to the process controller (140), and
(e) configuring the process controller (140) to run a power control application and to communicate to the IED (145) electrical process control messages pertaining to the power control application.

5. The method according to claim 4, wherein the step of generating the configuration file comprises translating or converting IEC61850 configuration information from the imported SCD file into the format native for plant process engineering.

6. The method according to claim 4, comprising
configuring the process controller (140) to communicate to the IED (145) IEC-61850 Generic Object Oriented Substation Event GOOSE messages.

7. The method according to claim 4, comprising
configuring the process controller (140) to run load shedding applications.

## Patentansprüche

1. Integriertes industrielles Automatisierungssystem zum Steuern von Anlageprozessen und zum Steuern von elektrischen Prozessen in einer industriellen Anlage mit einer Unterstation zum Verteilen von elektrischer Leistung an verschiedenartige Leistungsverbraucher innerhalb der Anlage, wobei das System Folgendes umfasst:
- eine intelligente elektronische Vorrichtung IED (145), die dafür ausgelegt ist, die Unterstation zu schützen und/oder zu steuern,
- eine Prozesssteuereinheit (140), die dafür ausgelegt ist, einen Anlageprozess über eine oder mehrere Prozesssteuervorrichtungen (160) zu steuern, und
- ein Anlageprozessentwicklungswerkzeug, das konfiguriert ist, eine Konfigurationsdatei in einem Format zu erzeugen, das der Anlageprozessentwicklung eigentümlich ist,
**dadurch gekennzeichnet, dass**
- das Anlageprozessentwicklungswerkzeug konfiguriert ist, eine Unterstationskonfigurationsbeschreibungsdatei (SCD-Datei), die aus dem Entwickeln einer Leistungssteuerungsanwendung auf der Grundlage von IEC 61850 folgt, zum Steuern des elektrischen Prozesses zu empfangen, und die Konfigurationsdatei auf der Grundlage der SCD-Datei zu erzeugen, und dass
- die Prozesssteuereinheit (140) konfiguriert ist, die Konfigurationsdatei, die durch das Anlageprozessentwicklungswerkzeug erzeugt wird, zu empfangen, die Leistungssteuerungsanwendung auszuführen und Steuernachrichten des elektrischen Prozesses, die zu der Leistungssteuerungsanwendung gehören, an die IED (145) zu übermitteln.

2. System nach Anspruch 1, wobei die Prozesssteuereinheit (140) konfiguriert ist, generische objektorientierte Unterstationsereignisnachrichten (GOOSE-Nachrichten) nach IEC 61850 an die IED (145) zu übermitteln.

3. System nach Anspruch 1, wobei die Prozesssteuereinheit (140) konfiguriert ist, Entlastungsanwendungen auszuführen.

4. Verfahren zum Steuern eines elektrischen Prozesses einer industriellen Anlage mit einer Unterstation zum Verteilen von elektrischer Leistung an verschiedenartige Leistungsverbraucher innerhalb der Anlage, wobei ein verteiltes Steuersystem DCS mit einer Prozesssteuereinheit (140) zum Steuern eines Anlagenprozesses über eine oder mehrere Prozesssteuervorrichtungen (160) und eine intelligente elektronische Vorrichtung IED (145), die dafür ausgelegt ist, die Unterstation zu schützen und/oder zu steuern, vorgesehen sind, wobei das Verfahren die folgenden Schritte umfasst:
(a) Entwickeln einer auf IEC 61850 basierenden Leistungssteuerungsanwendung zum Steuern des elektrischen Prozesses, was zu einer Unterstationskonfigurationsbeschreibungsdatei (SCD-Datei) führt;
(b) Importieren der SCD-Datei in ein Anlageprozess- oder DCS-Entwicklungswerkzeug;
(c) Erzeugen einer Konfigurationsdatei in einem Format, das für die Anlageprozessentwicklung eigen ist, durch das Anlagenprozessentwicklungswerkzeug und auf der Grundlage der importierten SCD-Datei;
(d) Übertragen der Konfigurationsdatei an die Prozesssteuereinheit (140) und
(e) Konfigurieren der Prozesssteuereinheit (140), um eine Leistungssteuerungsanwendung auszuführen und Steuernachrichten des elektrischen Prozesses, die zu der Leistungssteuerungsanwendung gehören, an die IED (145) zu übermitteln.

5. Verfahren nach Anspruch 4, wobei der Schritt des Erzeugens der Konfigurationsdatei das Übersetzen oder Umsetzen der Konfigurationsinformationen nach IEC 61850 von der importierten SCD-Datei in das Format, das für die Anlageprozessentwicklung eigen ist, umfasst.

6. Verfahren nach Anspruch 4, das das Konfigurieren der Prozesssteuereinheit (140) umfasst, um generische objektorientierte Unterstationsereignisnachrichten (GOOSE-Nachrichten) nach IEC 61850 an die IED (145) zu übermitteln.

7. Verfahren nach Anspruch 4, das das Konfigurieren der Prozesssteuereinheit (140) umfasst, um Entlastungsanwendungen auszuführen.

## Revendications

1. Système intégré d'automation industrielle servant à la commande de processus d'installation et à la commande de processus électriques dans une installation industrielle dotée d'une sous-station servant à distribuer une puissance électrique à divers consommateurs de puissance au sein de l'installation, le système comportant :
- un dispositif électronique intelligent, IED (145) prévu pour protéger et/ou commander la sous-station,
- un moyen (140) de commande de processus prévu pour commander un processus d'installation via un ou plusieurs dispositifs (160) de commande de processus, et
- un outil d'ingénierie des processus d'installation configuré pour générer un fichier de configuration dans un format natif pour l'ingénierie des processus d'installation,
**caractérisé en ce que**
- l'outil d'ingénierie des processus d'installation est configuré pour recevoir un fichier de description de configuration de sous-station (SCD) résultant de l'étude d'une application de commande de puissance d'après IEC-61850 en vue de commander le processus électrique, et pour générer le fichier de configuration d'après le fichier de SCD, et **en ce que**
- le moyen (140) de commande de processus est configuré pour recevoir le fichier de configuration généré par l'outil d'ingénierie des processus d'installation, pour exécuter l'application de commande de puissance et pour communiquer à l'IED (145) des messages de commande de processus électriques relatifs à l'application de commande de puissance.

2. Système selon la revendication 1, le moyen (140) de commande de processus étant configuré pour communiquer à l'IED (145) des messages d'événements génériques orientés objet de sous-station, GOOSE, selon IEC-61850.

3. Système selon la revendication 1, le moyen (140) de commande de processus étant configuré pour exécuter des applications de délestage.

4. Procédé de commande d'un processus électrique d'une installation industrielle dotée d'une sous-station servant à distribuer une puissance électrique à divers consommateurs de puissance au sein de l'installation, un système de commande répartie DCS doté d'un moyen (140) de commande de processus servant à commander un processus d'installation via un ou plusieurs dispositifs (160) de commande de processus et un dispositif électronique intelligent, IED (145) prévu pour protéger et/ou commander la sous-station étant mis en place, le procédé comportant les étapes consistant à :
(a) étudier une application de commande de puissance d'après IEC-61850 en vue de commander le processus électrique, ce qui se traduit par un fichier de description de configuration de sous-station, SCD ;
(b) importer le fichier de SCD dans un outil d'ingénierie des processus d'installation ou des DCS ;
(c) faire générer par l'outil d'ingénierie des processus d'installation un fichier de configuration dans un format natif pour l'ingénierie des processus d'installation, et d'après le fichier de SCD importé ;
(d) transférer le fichier de configuration au moyen (140) de commande de processus, et
(e) configurer le moyen (140) de commande de processus pour exécuter une application de commande de puissance et pour communiquer à l'IED (145) des messages de commande de processus électriques relatifs à l'application de commande de puissance.

5. Procédé selon la revendication 4, l'étape de génération du fichier de configuration comportant l'étape consistant à traduire ou à convertir des informations de configuration selon IEC-61850 provenant du fichier de SCD importé dans le format natif pour l'ingénierie des processus d'installation.

6. Procédé selon la revendication 4, comportant l'étape consistant à
configurer le moyen (140) de commande de processus pour communiquer à l'IED (145) des messages d'événements génériques orientés objet de sous-station, GOOSE, selon IEC-61850.

7. Procédé selon la revendication 4, comportant l'étape consistant à
configurer le moyen (140) de commande de processus pour exécuter des applications de délestage.
